Europäisches Patentamt

European Patent Office

Office européen des brevets

(11) Veröffentlichungsnummer: **0 158 919**
**A2**

(12) # EUROPÄISCHE PATENTANMELDUNG

(21) Anmeldenummer: 85103944.6

(22) Anmeldetag: 01.04.85

(51) Int. Cl.⁴: **B 29 C 49/00**
B 29 C 47/20, B 29 C 47/22

(30) Priorität: 14.04.84 DE 3414234

(43) Veröffentlichungstag der Anmeldung:
23.10.85 Patentblatt 85/43

(84) Benannte Vertragsstaaten:
BE DE FR GB IT NL SE

(71) Anmelder: BASF Aktiengesellschaft
Carl-Bosch-Strasse 38
D-6700 Ludwigshafen(DE)

(72) Erfinder: Franger, Dieter
Nelkenstrasse 7 b
D-6710 Frankenthal(DE)

(72) Erfinder: Lindner, Edmund
Edenkobener Strasse 9
D-6700 Ludwigshafen(DE)

(72) Erfinder: Lohrbaecher, Volker
Kisslichstrasse 1
D-6940 Weinheim(DE)

(54) Verfahren und Vorrichtung zur Herstellung blasgeformter Hohlkörper aus thermoplastischen Kunststoffen.

(57) Für die Herstellung blasgeformter Hohlkörper aus thermoplastischen Kunststoffen wird ein Vorformling aus einem Schlauchkopf ausgestoßen und von einer Blasform umfaßt, in der das Aufblasen zum Hohlkörper durch Einführen eines Druckmittels erfolgt. Um am Hohlkörper weitgehend gleiche Wanddicken zu erzielen, wird die Wanddicke des Vorformlings in seiner Axialrichtung und/oder über seinen Umfang partiell an vorgegebenen Stellen verändert. Diese Veränderung wird dadurch herbeigeführt, daß während des Ausstoß-Vorgangs die Wand des schlauchförmigen Vorförmlings durch einen oder mehrere, innen und/oder außen aufgebrachte und sich mit dem Vorformling verbindende Schmelzestränge verstärkt wird.

EP 0 158 919 A2

Verfahren und Vorrichtung zur Herstellung blasgeformter Hohlkörper aus thermoplastischen Kunststoffen

Die Erfindung bezieht sich auf ein Verfahren zur Herstellung blasgeformter Hohlkörper aus thermoplastischen Kunststoffen, bei dem ein Vorformling aus einem Schlauchkopf ausgestoßen und von einer Blasform umfaßt wird, in der das Aufblasen zum Hohlkörper durch Einführen eines Druckmittels erfolgt, und bei dem die Wanddicke des Vorformlings in seiner Axialrichtung und/oder über seinen Umfang partiell an vorgegebenen. Stellen verändert wird sowie auf eine Vorrichtung zur Durchführung des Verfahrens.

Bei der Herstellung von Hohlkörpern aus thermoplastischem Kunststoff nach dem Blasverfahren wird aus einer Düse ein schlauchförmiger Vorformling aus warmplastischem Kunststoff ausgestoßen. Der Vorformling wird dann von den beiden Hälften einer Blasform umfaßt und durch Einleiten eines Druckmittels (Blasluft) aufgeblasen, bis er sich an die gekühlten Innenwände der Blasform anlegt, dort erstarrt und so die durch die Blasform vorgegebene Gestalt annimmt. Je nach der Gestalt der Formhöhlung und der Lage des Vorformlings relativ dazu werden beim Blasvorgang Teilbereiche des Vorformlings unterschiedlich ausgereckt. Der fertige Hohlkörper bekommt so Wandbereiche unterschiedlicher Wanddicke. In ungünstigen Fällen kommt es sogar vor, daß der Hohlkörper bereits beim Aufblasen an Stellen großer Reckung aufplatzt. Erhöht man zur Abhilfe die Wanddicke des gesamten Vorformlings so, daß die nach dem Aufblasen dünnste Stelle noch eine ausreichende Dicke hat, so kann dadurch die Wanddicke an den übrigen Stellen des Hohlkörpers unzulässig groß werden. Damit verbunden ist auch eine erhebliche Einbuße an Wirtschaftlichkeit.

Es sind bereits zahlreiche Verfahren und Vorrichtungen bekannt, um die Wanddicke von blasgeformten Hohlkörpern zu vergleichmäßigen. So wird nach der CA-PS 788 896 der durch einen konischen Dorn und eine konische Düse gebildete ringförmige Austrittsspalt eines Schlauchkopfs während der Bildung des Vorformlings durch eine axiale Verschiebung des Dorns gegenüber der Düse in seiner Weise so verändert, daß am Vorformling Zonen unterschiedlicher Dicke entstehen. Die Zonen unterschiedlicher Dicke verlaufen hierbei ringförmig um den ganzen Schlauchumfang herum. Erstreckt sich am Blasformteil der Bereich der stärkeren Schlauchreckung ebenfalls um seinen gesamten Umfang, so kann auf diese Weise eine gleichmäßigere Wanddicke des Fertigteils erreicht werden. Örtliche, den Schlauchumfang nicht voll umgebende Verdickungen sind jedoch nicht herstellbar. Wenn sich an einem Blasformteil ein Bereich besonders starker Ausreckung nur über

Wr/P

BASF Aktiengesellschaft - 2 - O.Z. 0050/37070
0158919

einen Teil seines Umfangs erstreckt, sind nach dieser Lehre Bereiche unterschiedlicher Wanddicke nicht zu vermeiden.

Weiterhin ist es aus der DE-OS 26 54 001 bekannt, die Wandung eines Hohlstranges vor seinem Ausrecken in Abhängigkeit von einer sich ergebenden unterschiedlichen Reckfreudigkeit in ihrer Dicke derart zu beeinflussen, daß in Bereichen großer Reckfreudigkeit bzw. Reckung eine entsprechend große Dicke und in Bereichen geringer Reckfreudigkeit bzw. Reckung eine entsprechend geringe Dicke der Wandung eingestellt wird. Dabei erfolgt die Beeinflussung der Wandungsdicke des Hohlstranges durch Änderung des Durchflußquerschnitts von Teilbereichen einer Ringdüse mit Hilfe verstellbarer, elastischer Bauteile oder durch Veränderung der Durchflußgeschwindigkeit des Kunststoffes. Im ersten Fall ergeben sich indes nur dann gerade Vorformlinge, wenn die Wanddickenänderungen jeweils paarweise an einander gegenüberliegenden Stellen vorgenommen werden. Außerdem ist hier eine Veränderung der Spaltweite nur in den Grenzen möglich, die die elastische Verformbarkeit des Bauteils zuläßt. Bei der Veränderung des Massestromes vor dem Düsenaustritt werden in einzelnen Umfangsbereichen unterschiedliche Masseströme durch einen in Querschnitt konstanten Austrittsspalt der Düse gefördert, so daß sich ein örtliches Mehrangebot an Masse durch eine örtliche Erhöhung und ein örtliches Minderangebot an Masse durch eine örtliche Verringerung der Austrittsgeschwindigkeit, weniger aber durch eine Vergrößerung bzw. Verminderung der Wanddicke des Vorformlings äußert.

Daraus ergab sich die der Erfindung zugrundeliegende Aufgabe, die darin bestand, einen schlauchförmigen Vorformling derart auszubilden, daß der fertige Hohlkörper gleiche Wanddicken aufweist.

Diese Aufgabe wird bei einem Verfahren der eingangs bezeichneten Art grundsätzlich dadurch gelöst, daß während des Ausstoß-Vorgangs die Wand des schlauchförmigen Vorformlings durch einen oder mehrere, innen und/ oder außen aufgebrachte und sich mit dem Vorformling verbindende Schmelzestränge verstärkt wird.

Die Vergrößerung der Wanddicke des Vorformlings erfolgt nicht gleichmäßig über seinen gesamten Umfang und/oder seine gesamte Länge hinweg, sondern partiell nur an den Stellen, die nach dem Schließen der Blasform beim darauffolgenden Aufblasen zum Hohlkörper eine erhebliche Reckung erfahren und die sonst, bei unverändertem Schlauchwandquerschnitt, gegenüber den weniger weit ausgereckten Schlauchteilen, bedeutend dünnere Wandstärken aufweisen würden.

Gegenstand der Erfindung ist weiterhin eine Vorrichtung zur Durchführung des Verfahrens mit den Merkmalen der Ansprüche 2 bis 8.

Beispielhafte Ausführungsformen der erfindungsgemäßen Vorrichtung sind in den Zeichnungen schematisch dargestellt und im folgenden näher erläutert.

Es zeigt
Figur 1    die Vorrichtung (Schlauchkopf) mit Längsschnitt, wobei verstärkenden Schmelzestränge außen auf den Vorformling aufgebracht werden,
Figur 2    einen Querschnitt gemäß der Linie A, B der Figur 1,
Figur 3    eine weitere Ausführungsform im Längsschnitt, bei der die verstärkenden Schmelzestränge innen auf den Vorformling aufgebracht werden und
Figur 4    eine Teilansicht in Pfeilrichtung C der Vorrichtung nach Figur 3.

Bei der Vorrichtung gemäß der Erfindung ist wie bei dem bisher bekannten Schlauchköpfen ein Dorn (3) in der Führungsbohrung (1) eines Gehäuses (2) angeordnet, in dessen unteren Teil ein den Dorn (3) umgebender Einsatz (7) eingelassen ist. Der Dorn bildet zusammen mit der Mantelfläche der Führungsbohrung einen Fließkanal (4) aus, durch den plastifizierter Kunststoff zu dem den Vorformling (5) bildenden Ringspalt (6) geführt wird. Der Einsatz (7) ist von einem verstellbaren Düsenring (9) umgeben. Zwischen dem Einsatz (7) und dem Düsenring (9) ist in dem Düsenring ein Ringkanal (10) enthalten, in den eine vom Fließkanal (4) ausgehende Bohrung (12) mündet. In dieser Bohrung ist ein steuerbares Absperrorgan (22) vorgesehen, welches durch Drehen in den Pfeilrichtungen D ein Öffnen und Sperren der Bohrung erlaubt. Mit 11 bzw. 11a, 11b, 11c sind eine oder mehrere Ausnehmungen in dem Einsatz (7) und/oder Düsenring (9) bezeichnet, über die den Vorformling (5) verstärkende Schmelzestränge (13) erzeugt werden. Diese Schmelzestränge (13) verbinden sich unmittelbar nach ihrem Austritt ins Freie mit der Außenwand des Vorformlings (5), ohne daß es hierfür besonderer Einrichtungen bedarf. Dabei ist es möglich, die Schmelzestränge bezüglich ihrer Länge und/oder Dicke während des Austragens zu verändern.

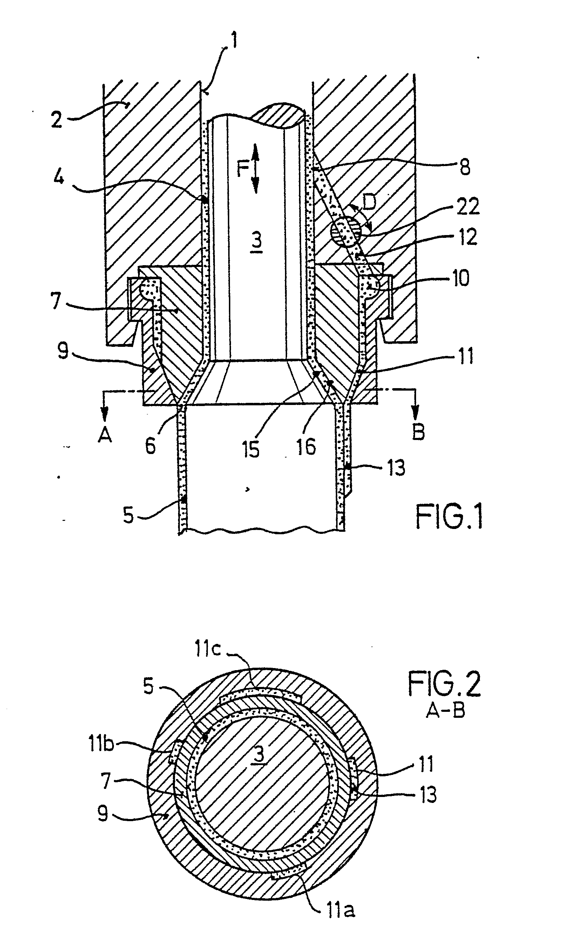

In dem Schlauchkopf nach Figur 1 wird der zusätzliche Schmelzestrang (13) von einer Anzapfstelle (8) aus dem Fließkanal (4) abgeleitet und dem Ringkanal (10) zugeführt. Das Fließen des plastifizierten Kunststoffes in der Bohrung (12) bis in die Ausnehmung (11) wird durch den Druck bewirkt, der im Fließkanal (4) an der Anzapfstelle (8) herrscht. Es sind auch andere Möglichkeiten zur Versorgung des Ringspaltes (10) denkbar, beispielsweise über einen nicht dargestellten periodisch entleerbaren Sammelraum oder über eine von einer anderen Massequelle beaufschlagte Zuführleitung mit einem darin befindlichen steuerbaren Absperrorgan. Die Wahl der Massezuführung in den Rinspalt (10) richtet sich auch nach dem Massestrom, der erforderlich ist, um einen gewünschten Strang (13) zur Verfügung zu stellen. Entsprechend der in Figur 2 gezeigten Darstellung können im Düsenring (9) auch mehrere Ausnehmungen 11, 11a, 11b, 11c angebracht sein, über die eine entsprechende Anzahl Schmelzestränge zur örtlichen Verstärkung des Vorformlings (5) gleichzeitig ausgestoßen werden. Diese Ausnehmungen sind beliebig am Umfang des Ringspalts angeordnet. Der Ringkanal (10) kann sich je nach der Lage der Ausnehmung (11) auch nur über einen Teil des Umfangs des Düsenringes (9) erstrecken. Ebenso ist es möglich, den Ringkanal in mehrere einzelne, den einzelnen Ausnehmungen 11 bis 11c zugeordnete und untereinander nicht verbundene Abschnitte aufzuteilen, die durch eine gemeinsame oder jeweils durch voneinander unabhängige Zuführleitungen mit Masse versorgt werden.

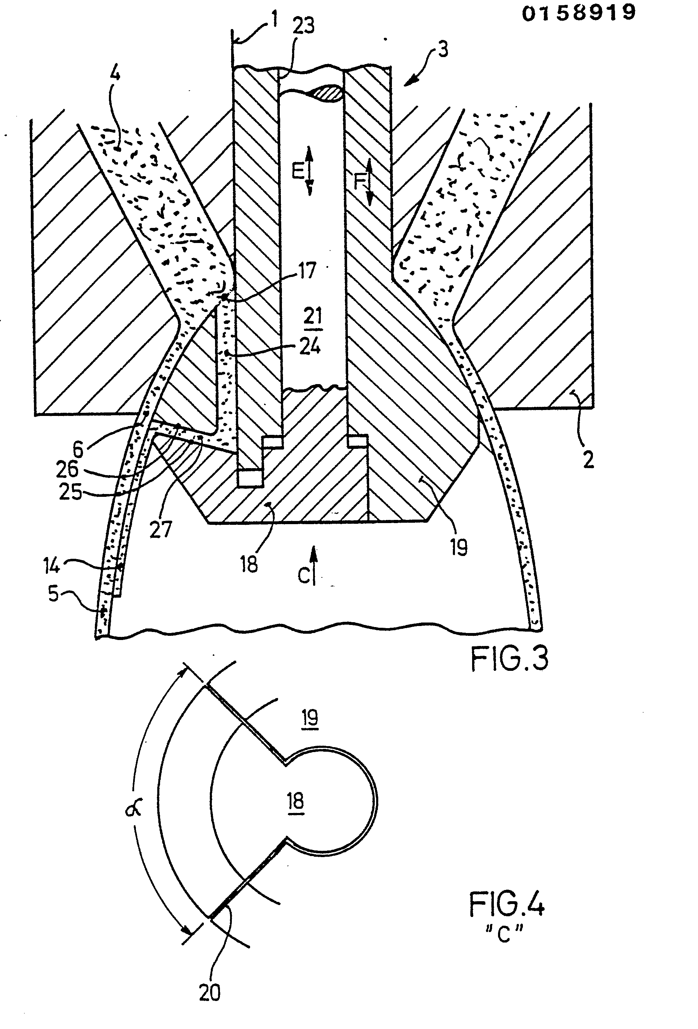

Während die zusätzlichen Schmelzestränge bei der Ausführungsform nach den Figuren 1 und 2 auf der Außenseite des Vorformlings aufgebracht und somit am fertigen Hohlkörper erkennbar sind, werden derartige Erscheinungen mit der in den Figuren 3 und 4 gezeigten Vorrichtung vermieden. Dabei besteht der Dorn (3) aus zwei koaxial zueinander angeordneten Bauteilen (18 u. 19). Das Bauteil (19) weist eine sich über einen Winkel $\alpha$ erstreckende sektorenförmige Ausnehmung (20) auf, in die das in Richtung der Dornachse (Pfeilrichtung E) verschiebbare Bauteil (18) eingesetzt und mit seinem zylindrischen Teil (21) in der Bohrung (23) geführt ist. Oberhalb des Bereichs der Ausnehmung (20) besitzt der Dorn (3) einen Durchbruch (24), der einen vom Ringspalt (6) entfernten Bereich (17) des Fließkanals (4) mit einem durch die Fläche (25) des Bauteils (18) und die untere Fläche (26) der Ausnehmung (20) begrenzten Spalt (27) verbindet. Durch Heben und Senken des Bauteils (18) ist es möglich, den Spalt (27) zu verschließen und zu öffnen und somit die Zufuhr des durch den Durchbruch (24, 27) auf das Innere des Vorformlings (5) geleiteten Schmelzestranges (14) zu unterbrechen oder dessen Dicke zu regulieren.

Eine derartige Konstruktion mit der selben Wirkungsweise kann auch am Düsenring (9) außerhalb des Ringspaltes (6) angebracht werden, um somit auch die Weite des Spaltes zu verändern, der den Schmelzestrang (13) auf die Außenseite des Vorformlings (5) leitet.

Die Besonderheit der Erfindung besteht darin, Wandverdickungen außerhalb des den Vorformling bildenden Ringspaltes (6) herzustellen, so daß das durch ungleiche Spaltweite oder durch unterschiedlichen Massestrom im Ringspalt verursachte Krümmen des Vorformlings vermieden wird. Neben den durch das Aufbringen der Schmelzestränge (13 bzw. 14) herstellbaren örtlichen Verstärkungen des Vorformlings können auch durch Verschieben des Dornes (3) in den Pfeilrichtungen F infolge des Zusammenwirkens der den Ringspalt (6) bildenden kegelförmigen Abschnitte (15 u. 16) unabhängige Wandverdickungen bzw. Dünnstellen am Vorformling (5) selbst erzeugt werden.

Im Rahmen der Erfindung ist es zudem möglich, durch eine Kombination der Schlauchkopfausführungen Vorformlinge herzustellen, die gleichzeitig bezüglich ihres Umfangs begrenzte außen- und innenliegende Verstärkungen sowie um den Umfang herumführende Wanddickenunterschiede aufweisen, wobei die innenliegenden, außenliegenden und herumführenden Verstärkungen bezüglich ihrer Länge und Dicke jeweils unabhängig voneinander aufgebracht und eingestellt werden können.

Desweiteren können in ähnlicher Weise auch flächige, platten- oder folienartige warmplastische Vorformlinge mit örtlichen Verstärkungen versehen werden, um sie anschließend in einem Tiefziehverfahren durch Formen über eine Positiv- bzw. in einer Negativform mit Hilfe von Druckluft oder Vakuum in Formkörper umzuformen, wenn beispielsweise für die Herstellung der Vorformlinge anstelle eines Schlauchkopfes eine Breitschlitzdüse verwendet wird.

0158919

Patentansprüche

1. Verfahren zur Herstellung blasgeformter Hohlkörper aus thermoplastischen Kunststoffen, bei dem ein Vorformling aus einem Schlauchkopf ausgestoßen und von einer Blasform umfaßt wird, in der das Aufblasen zum Hohlkörper durch Einführen eines Druckmittels erfolgt, und bei dem die Wanddicke des Vorformlings in seiner Axialrichtung und/oder über seinen Umfang partiell an vorgegebenen Stellen verändert wird, dadurch gekennzeichnet, daß während des Ausstoß-Vorgangs die Wand des schlauchförmigen Vorformlings durch einen oder mehrere, innen und/oder außen aufgebrachte und sich mit dem Vorformling verbindende Schmelzestränge verstärkt wird.

2. Vorrichtung zur Durchführung des Verfahrens nach Anspruch 1 mit einem Schlauchkopf und einer Blasform, wobei der Schlauchkopf aus einem Gehäuse (2) mit einer Führungsbohrung (1) zur Aufnahme eines Dorns (3) besteht, und der Dorn mit der Mantelfläche der Führungsbohrung einen Fließkanal (4) und im Bereich des Fließkanalaustritts zwischen zwei miteinander korrespondierenden kegelförmigen Abschnitten (15, 16) einen Ringspalt (6) definiert, dadurch gekennzeichnet, daß der Ringspalt (6) zwischen dem Dorn (3) und einem in dem Geäuse (2) befindlichen Einsatz (7) ausgebildet und der Einsatz (7) von einem Düsenring (9) umgeben ist, und daß in dem Einsatz (7) und/oder Düsenring (9) wenigstens eine Ausnehmung (11) für die Zufuhr eines Schmelzestrangs zum Ringspalt (6) vorgesehen ist.

3. Vorrichtung nach Anspruch 2, dadurch gekennzeichnet, daß mehrere Ausnehmungen (11, 11a, 11b, 11c) vorgesehen sind, die über einen Ringkanal (10) zwischen dem Einsatz (7) und dem Düsenring (9) miteinander in Verbindung stehen.

4. Vorrichtung nach den Ansprüchen 2 und 3, dadurch gekennzeichnet, daß die Ausnehmung (11) bzw. der Ringkanal (10) über eine Bohrung (12) im Gehäuse (2) mit dem Fließkanal (4) in Verbindung steht.

5. Vorrichtung nach Anspruch 4, dadurch gekennzeichnet, daß die Bohrung (12) im Gehäuse (2) ein steuerbares Absperrorgan (22) enthält.

6. Vorrichtung zur Durchführung des Verfahrens nach Anspruch 1, mit einem Schlauchkopf und einer Blasform, wobei der Schlauchkopf aus einem Gehäuse mit einer Führungsbohrung zur Aufnahme eines Dorns besteht, und der Dorn mit der Mantelfläche der Führungsbohrung einen Fließkanal und im Bereich des Fließkanalaustritts zwischen zwei miteinander korrespondierenden kegelförmigen Abschnitten einen Ringspalt definiert, _dadurch gekennzeichnet_, daß der Dorn (3) aus zwei koaxial zueinander angeordneten Bauteilen (18 u. 19) gebildet ist und wenigstens einen von dem Fließkanal (4) ausgehenden und an dem Ringspalt (6) mündenden Durchbruch (24, 26) besitzt.

7. Vorrichtung nach Anspruch 6, _dadurch gekennzeichnet_, daß die Weite des Spaltes (27) des Durchbruch (24, 26) verstellbar ist.

8. Vorrichtung nach einem oder mehreren der vorhergehenden Ansprüche, _dadurch gekennzeichnet_, daß der Dorn (3) gegenüber dem Gehäuse (2) zur Veränderung der Weite des Ringspaltes (6) axial verschiebbar ist.

Zeichn.

FIG.1

FIG.2
A-B

c.z. 0050/37070
0158919

O.Z. 0050/37070

0158919

FIG.3

FIG.4
"C"